# EUROPEAN PATENT APPLICATION

(11) **EP 4 631 722 A1**
(43) Date of publication of application: **15.10.2025**
(21) Application number: 25165778.9
(22) Date of filing: 24.03.2025
(51) Int. Cl.: B32B 18/00, C04B 35/80

(54) **COMPOSITE PANEL AND METHOD OF MANUFACTURING**

(30) Priority: 11.04.2024 US 202418632387
(71) Applicant: General Electric Company, Cincinnati, Ohio 45215 (US)
(72) Inventor: DUNN, Daniel Gene, Guilderland, 12084 (US); WEAVER, Jared Hogg, Clifton Park (US); MCGUIGAN, Henry Charles, Duanesburg (US)
(74) Representative: Openshaw & Co.

(57) **Abstract**

A method of manufacturing a composite panel is provided. The method includes applying a composite face sheet to a first side of a core structure, the core structure comprising a plurality of first ceramic particles each having a first particle size that is within a first particle size range and the composite face sheet comprising a plurality of second ceramic particles each having a second particle size that is within a second particle size range, wherein the second particle size range is smaller than the first particle size range and densifying the composite panel through infiltration, wherein the infiltration comprises transport of an infiltrant through the core structure and into the composite face sheet.

## Description

### FIELD

The present disclosure relates to composite panels, and more particularly, to densified composite panels.

### BACKGROUND

Ceramic matrix composites ("CMCs") have high temperature capability and are light weight. The composites are thus an attractive material for various applications, such as for components in gas turbine engines where temperature durability and weight are important considerations. Current methods of preparing CMC products involve forming a laminate of ceramic fiber and matrix, thermally treating the laminate, applying an infiltrant to the laminate, and densifying the laminate by infiltration with the infiltrant. The densified laminate may then be machined to prepare a CMC product with the desired dimensions. Alternatively, woven or braided preforms can be used instead of laminates.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a cross-sectional view of a gas turbine engine in accordance with an exemplary aspect of the present disclosure.
FIG. 2 illustrates an exploded perspective view of an exemplary composite panel with a plurality of cells, the cells being in a hexagonal shape;
FIG. 3 illustrates an enlarged and exploded view of a composite panel having a core structure and composite sheets prior to melt infiltration, in which the particles of the core structure and composite sheets are shown in accordance with embodiments of the present disclosure.
FIG. 4 illustrates an enlarged view of the composite panel having the core structure and the composite sheets prior to melt infiltration, in which the particles of the core structure and composite sheets are shown in accordance with embodiments of the present disclosure.
FIG. 5 illustrates an enlarged view of the composite panel having the core structure and the composite sheets after melt infiltration, in which the particles of the core structure and composite sheets are shown in accordance with embodiments of the present disclosure.
FIG. 6 provides a flowchart diagram showing an exemplary method of manufacturing a composite panel.

### DETAILED DESCRIPTION

During infiltration to densify a preform that becomes a CMC laminate, an infiltrant may or may not react with one or more constituents in the preform. For example, during infiltration of molten silicon into a carbon containing preform, the silicon and carbon can react to form silicon carbide. In this case, the volume of silicon carbide formed from this reaction is greater than the volume of carbon that was consumed. The result is that the pore structure that transports silicon through the preform is reduced by this reaction. In the extreme case, the pores can close completely and choke off infiltration. In the case of chemical vapor infiltration ("CVI"), the reaction product of the infiltrating gases deposits on the surface of the pores, thereby reducing the amount of porosity. To successfully infiltrate a preform, the infiltrating fluid should have a percolated path to the infiltration front. This is balanced by the desire to have a fully dense product with a controlled amount of unreacted infiltrant or residual porosity.

Infiltration of thick preforms is especially challenging when infiltration pathways, such as pores, seal up or choke-off prematurely lowering the overall permeability. In small parts, the infiltration distance is relatively short, such that a part may be fully infiltrated over a reasonable time scale even if the permeability of the matrix becomes low during infiltration. In larger, thicker parts, the infiltration distance is longer and the infiltrant may not reach the innermost areas of the preform. Permeability from the reacted or deposited matrix material may be too low, such as so low as to arrest infiltration completely, resulting in a defective part.

Thus, an improved method of preparing ceramic matrix composites, particularly using melt infiltration, is desirable in the art.

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a", "an", and "the" include plural references unless the context clearly dictates otherwise.

The term "at least one of" in the context of, e.g., "at least one of A, B, and C" refers to only A, only B, only C, or any combination of A, B, and C.

The term "gas turbine engine" refers to an engine having a turbomachine as all or a portion of its power source. Example gas turbine engines include turbofan engines, turboprop engines, turbojet engines, turboshaft engines, etc., as well as hybrid-electric versions of one or more of these engines.

The term "turbomachine" refers to a machine including one or more compressors, a heat generating section (e.g., a combustion section), and one or more turbines that together generate a torque output.

The term "combustion section" refers to any heat addition system for a turbomachine. For example, the term combustion section may refer to a section including one or more of a deflagrative combustion assembly, a rotating detonation combustion assembly, a pulse detonation combustion assembly, or other appropriate heat addition assembly. In certain example embodiments, the combustion section may include an annular combustor, a can combustor, a cannular combustor, a trapped vortex combustor (TVC), or other appropriate combustion system, or combinations thereof.

The terms "low" and "high", or their respective comparative degrees (e.g., -er, where applicable), when used with a compressor, a turbine, a shaft, or spool components, etc. each refer to relative speeds within an engine unless otherwise specified. For example, a "low turbine" or "low speed turbine" defines a component configured to operate at a rotational speed, such as a maximum allowable rotational speed, lower than a "high turbine" or "high speed turbine" of the engine.

The terms "forward" and "aft" refer to relative positions within a gas turbine engine or vehicle, and refer to the normal operational attitude of the gas turbine engine or vehicle. For example, with regard to a gas turbine engine, forward refers to a position closer to an engine inlet and aft refers to a position closer to an engine nozzle or exhaust.

The terms "upstream" and "downstream" refer to the relative direction with respect to fluid flow in a fluid pathway. For example, "upstream" refers to the direction from which the fluid flows, and "downstream" refers to the direction to which the fluid flows.

As used herein, the terms "axial" and "axially" refer to directions and orientations that extend substantially parallel to a centerline of the gas turbine engine. Moreover, the terms "radial" and "radially" refer to directions and orientations that extend substantially perpendicular to the centerline of the gas turbine engine. In addition, as used herein, the terms "circumferential" and "circumferentially" refer to directions and orientations that extend arcuately about the centerline of the gas turbine engine.

Chemical elements are discussed in the present disclosure using their common chemical abbreviation, such as commonly found on a periodic table of elements. For example, hydrogen is represented by its common chemical abbreviation H; helium is represented by its common chemical abbreviation He; and so forth.

As used herein, the term "composite material" refers to a material produced from two or more constituent materials, wherein at least one of the constituent materials is a non-metallic material. Example composite materials include polymer matrix composites (PMC), ceramic matrix composites (CMC), chopped fiber composite materials, etc.

As used herein, ceramic matrix composite or "CMC" refers to a class of materials that include a reinforcing material (e.g., reinforcing fibers or particles) surrounded by a ceramic matrix phase. Generally, the reinforcing fibers provide structural integrity to the ceramic matrix. Some examples of matrix materials of CMCs can include, but are not limited to, non-oxide silicon-based materials (e.g., silicon carbide, silicon nitride, or mixtures thereof), oxide ceramics (e.g., silicon oxycarbides, silicon oxynitrides, aluminum oxide (Al₂O₃), silicon dioxide (SiO₂), aluminosilicates, or mixtures thereof), or mixtures thereof. Optionally, ceramic particles (e.g., oxides of Si, Al, Zr, Y, and combinations thereof) and inorganic fillers (e.g., pyrophyllite, wollastonite, mica, talc, kyanite, and montmorillonite) may also be included within the CMC matrix.

Some examples of reinforcing fibers or particles of CMCs can include, but are not limited to, non-oxide silicon-based materials (e.g., silicon carbide, silicon nitride, or mixtures thereof), non-oxide carbon-based materials (e.g., carbon, zirconium carbide), oxide ceramics (e.g., silicon oxycarbides, silicon oxynitrides, aluminum oxide (Al₂O₃), silicon dioxide (SiO₂), aluminosilicates such as mullite, or mixtures thereof), or mixtures thereof.

Generally, particular CMCs may be referred to as their combination of type of fiber/type of matrix. For example, C/SiC for carbon-fiber-reinforced silicon carbide; SiC/SiC for silicon carbide-fiber-reinforced silicon carbide, SiC/SiN for silicon carbide fiber-reinforced silicon nitride; SiC/SiC-SiN for silicon carbide fiber-reinforced silicon carbide/silicon nitride matrix mixture, etc. In other examples, the CMCs may include a matrix and reinforcing fibers comprising oxide-based materials such as aluminum oxide (Al₂O₃), silicon dioxide (SiO₂), aluminosilicates, and mixtures thereof. Aluminosilicates can include crystalline materials such as mullite (3Al₂O₃·2SiO₂), as well as glassy aluminosilicates.

In certain embodiments, the reinforcing fibers may be bundled and/or coated prior to inclusion within the matrix. For example, bundles of the fibers may be formed as a reinforced tape, such as a unidirectional reinforced tape. A plurality of the tapes may be laid up together to form a preform component. The bundles of fibers may be impregnated with a slurry composition prior to forming the preform or after formation of the preform. The preform may then undergo thermal processing and subsequent chemical processing to arrive at a component formed of a CMC material having a desired chemical composition. For example, the preform may undergo a cure or burn-out to yield a high char residue in the preform, and subsequent melt-infiltration with silicon, or a cure or pyrolysis to yield a silicon carbide matrix in the preform, or subsequent chemical vapor infiltration with silicon carbide. Additional steps may be taken to improve densification of the preform, either before or after chemical vapor infiltration, by injecting it with a liquid resin or polymer followed by a thermal processing step to fill the pores with silicon carbide. CMC material as used herein may be formed using any known or hereinafter developed methods including but not limited to melt infiltration, chemical vapor infiltration, polymer impregnation pyrolysis (PIP), or any combination thereof.

Such materials, along with certain monolithic ceramics (i.e., ceramic materials without a reinforcing material), are particularly suitable for higher temperature applications. Additionally, these ceramic materials are lightweight compared to superalloys, yet can still provide strength and durability to the component made therefrom. Therefore, such materials are currently being considered for many gas turbine components used in higher temperature sections of gas turbine engines, such as airfoils (e.g., turbines, and vanes), combustors, shrouds, structural elements of thermal protection systems, aerodynamic control surfaces such as a fin, or other like components, that would benefit from the lighter-weight and higher temperature capability these materials can offer.

As described herein, the presently disclosed subject matter involves the use of additive manufacturing machines or systems. As used herein, the term "additive manufacturing" refers generally to manufacturing technology in which components are manufactured in a layer-by-layer manner. An exemplary additive manufacturing machine may be configured to utilize any suitable additive manufacturing technology. The additive manufacturing machine may utilize an additive manufacturing technology that includes a powder bed fusion (PBF) technology, such as a direct metal laser melting (DMLM) technology, a selective laser melting (SLM) technology, a directed metal laser sintering (DMLS) technology, or a selective laser sintering (SLS) technology. In an exemplary PBF technology, thin layers of powder material are sequentially applied to a build plane and then selectively melted or fused to one another in a layer-by-layer manner to form one or more three-dimensional objects. Additively manufactured objects are generally monolithic in nature and may have a variety of integral sub-components.

Additionally or alternatively suitable additive manufacturing technologies may include, for example, Fused Deposition Modeling (FDM) technology, Direct Energy Deposition (DED) technology, Laser Engineered Net Shaping (LENS) technology, Laser Net Shape Manufacturing (LNSM) technology, Direct Metal Deposition (DMD) technology, Digital Light Processing (DLP) technology, Binder Jet Printing (BJP), and other additive manufacturing technologies that utilize an energy beam or other energy source to bond or solidify into a shape an additive manufacturing material such as a powder material. In fact, any suitable additive manufacturing modality may be utilized with the presently disclosed subject matter.

Additive manufacturing technology may generally be described as fabrication of objects by building objects point-by-point, line-by-line, layer-by-layer, typically in a vertical direction. Other methods of fabrication are contemplated and within the scope of the present disclosure. For example, although the discussion herein refers to the addition of material to form successive layers, the presently disclosed subject matter may be practiced with any additive manufacturing technology or other manufacturing technology, including layer-additive processes, layer-subtractive processes, or hybrid processes.

The additive manufacturing processes described herein may be used for forming components using any suitable material. For example, the material may be metal, ceramic, polymer, epoxy, photopolymer resin, plastic, or any other suitable material that may be in solid, powder, sheet material, wire, or any other suitable form, or combinations thereof. Additionally, or in the alternative, exemplary materials may include metals, ceramics, or binders, as well as combinations thereof. Exemplary ceramics may include ultra-high-temperature ceramics, and/or precursors for ultra-high-temperature ceramics, such as polymeric precursors. Each successive layer may be, for example, from about 10 µm to 200 µm, although the thickness may be determined based on any number of parameters and may be any suitable size.

As used herein, the term "build plane" refers to a plane defined by a surface upon which an energy beam impinges to selectively irradiate and thereby bond or consolidate powder material during an additive manufacturing process. Generally, the surface of a powder bed defines the build plane. During irradiation of a respective layer of the powder bed, a previously irradiated portion of the respective layer may define a portion of the build plane. Prior to distributing powder material across a build module, a build plate that supports the powder bed generally defines the build plane.

As used herein, the term "consolidate" or "consolidating" refers to solidification of powder material into a collective structure, such as a result of binding or irradiating the powder material, including by way of melting, bonding, fusing, joining, sintering, or the like.

The present disclosure is generally related to manufacturing ceramic matrix composite (CMC) components using additive manufacturing.

Manufacturing CMC components often involves aligning layers of a fiber reinforcement material to be processed into a final product. The layers may be formed using sheets of reinforcement materials pre-impregnated with ceramic or pre-ceramic materials. Furthermore, ceramic or pre-ceramic materials may additionally or alternatively be added during or after alignment or the layup processes. However, the shape and size of the CMC components may be limited as a result of the geometry of the original layups, thereby rendering complex geometries for CMC components difficult to achieve.

Additive manufacturing may be incorporated into CMC manufacturing, such as for large hybrid CMC structures that have an additively manufactured core laminated with CMC overlays. Additive manufacturing allows for the layer-by-layer building of a green body structure, potentially having more complex geometries such a honeycomb pattern or a component with cooling channels and holes. After printing, the green body structure may be subjected to a curing or burnout process to remove binder material from the component. Subsequently, the component can be densified, such as through silicon infiltration, reaction-bonding, chemical vapor infiltration, and other densification methods to reduce porosity in the component. However, the feedstock material used for additive manufacturing CMC components, such as the core structure of such CMC components, may include ceramic feedstock powder. For instance, the feedstock may utilize SiC, Si₃N₄, or mullite granules.

Silicon melt infiltrated CMCs have fine microstructures in order to obtain high properties and to accommodate fine diameter fibers. This fine structure tends to have slow transport of molten silicon during melt infiltration, which limits the size of a structure that can be melt infiltrated in a reasonable amount of time.

The present disclosure is related to a composite panel having a core structure and composite face sheet(s) bonded to one or both sides of the core structure. The core structure has a coarser microstructure (i.e., larger ceramic particles and therefore larger pores between the larger ceramic particles) than the composite face sheet(s), thereby resulting in a much higher permeability of molten silicon during melt infiltration due to the increased pore size of the core structure. This advantageously allows for larger CMC structures to be melt infiltrated in shorter times. Additionally, the rapid transport of molten silicon through the core structure allows for silicon to permeate and better infiltrate into the composite face sheet(s) adjacent to the core structure, which would otherwise be difficult due to the smaller ceramic particles and therefor smaller pores of the ceramic face sheet(s).

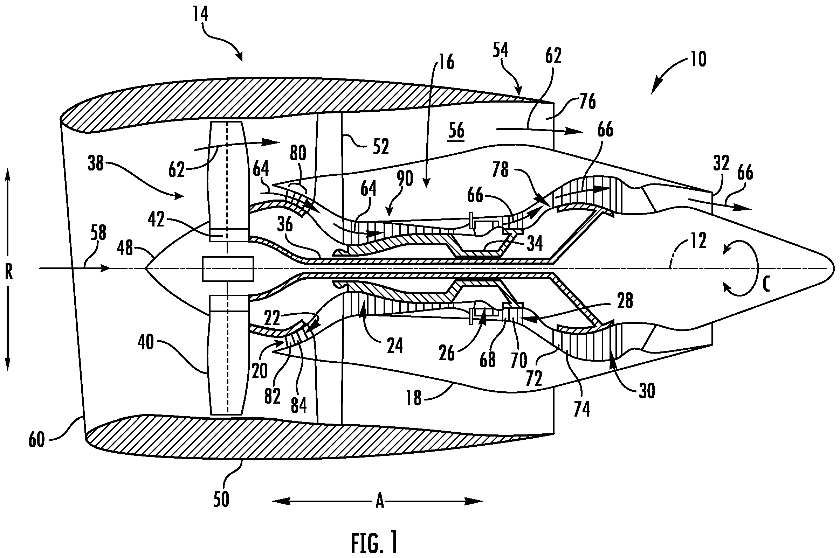

Referring now to the drawings, wherein identical numerals indicate the same elements throughout the figures, FIG. 1 is a schematic cross-sectional view of a gas turbine engine in accordance with an exemplary aspect of the present disclosure. More particularly, for the embodiment of FIG. 1, the gas turbine engine is a high-bypass turbofan jet engine, referred to herein as "turbofan engine 10." As shown in FIG. 1, the turbofan engine 10 defines an axial direction A (extending parallel to a longitudinal centerline 12 provided for reference), a circumferential direction C (extending about the longitudinal centerline 12 and the axial direction A), and a radial direction R. In general, the turbofan engine 10 includes a fan section 14 and a core turbine engine 16 disposed downstream from the fan section 14.

The exemplary core turbine engine 16 depicted generally includes an outer casing 18 that is substantially tubular and defines an annular inlet 20. The outer casing 18 encases, in serial flow relationship, a compressor section including a booster or low pressure (LP) compressor 22 and a high pressure (HP) compressor 24; a combustion section 26; a turbine section including a high pressure (HP) turbine 28 and a low pressure (LP) turbine 30; and a jet exhaust nozzle section 32. A high pressure (HP) shaft or spool 34 drivingly connects the HP turbine 28 to the HP compressor 24. A low pressure (LP) shaft or spool 36 drivingly connects the LP turbine 30 to the LP compressor 22.

For the depicted embodiment, fan section 14 includes a fan 38 having a plurality of fan blades 40 coupled to a hub or disk 42 in a spaced apart manner. As depicted, fan blades 40 extend outward from disk 42 generally along the radial direction R. The fan blades 40 and disk 42 are together rotatable about the longitudinal centerline 12 by LP shaft or spool 36. In some embodiments, a power gear box having a plurality of gears may be included for stepping down the rotational speed of the LP shaft or spool 36 to a more efficient rotational fan speed.

Referring still to the exemplary embodiment of FIG. 1, the disk 42 is covered by a rotatable front nacelle 48 aerodynamically contoured to promote an airflow through the plurality of fan blades 40. Additionally, the exemplary fan section 14 includes an annular outer nacelle or fan case 50 that circumferentially surrounds the fan 38 and/or at least a portion of the core turbine engine 16. It should be appreciated that fan case 50 may be configured to be supported relative to the core turbine engine 16 by a plurality of circumferentially-spaced outlet guide vanes 52. Moreover, a downstream section 54 of the fan case 50 may extend over an outer portion of the core turbine engine 16 so as to define a bypass airflow passage 56 therebetween.

During operation of the turbofan engine 10, a volume of air 58 enters turbofan engine 10 through an associated inlet 60 of the fan case 50 and/or fan section 14. As the volume of air 58 passes across fan blades 40, a first portion 62 of the air 58 as indicated by arrows is directed or routed into the bypass airflow passage 56 and a second portion 64 of the air 58 as indicated by arrows is directed or routed into the LP compressor 22. The ratio between the first portion 62 of air and the second portion 64 of air is commonly known as a bypass ratio. The pressure of the second portion 64 of air is then increased as it is routed through the compressor section and into the combustion section 26, where it is mixed with fuel and burned to provide combustion gases 66. More particularly, the compressor section includes the LP compressor 22 and the HP compressor 24 that each may comprise a plurality of compressor stages 80, with each of the plurality of compressor stages 80 including both an annular array or circumferential row of stationary compressor vanes 82 (also referred to as compressor stator vanes) and an annular array or circumferential row of rotating compressor blades 84 (also referred to as compressor rotor blades) positioned immediately downstream of the compressor vanes 82. The compressor blades 84 in the LP compressor 22 are coupled to the LP shaft or spool 36, and the plurality of compressor blades in the HP compressor 24 are coupled to the HP shaft or spool 34. The plurality of compressor vanes 82 in the LP compressor 22 are coupled to a compressor casing, and the plurality of compressor vanes 82 in the HP compressor 24 are coupled to a compressor casing; at least a portion of the compressor vanes 82 are coupled to compressor casing 90. In some embodiments, the compressor casing 90 may extend through both the LP compressor 22 and the HP compressor 24 and support all of the compressor vanes 82. In other embodiments, the compressor casing 90 supports only a portion of the compressor vanes 82 and may support only a portion of the compressor vanes 82 in the HP compressor 24. As previously described, as the second portion 64 of air passes through the sequential stages of compressor vanes 82 and the compressor blades 84, the volume of air is pressurized, i.e., the pressure of the air is increased prior to combustion with fuel in the combustion section 26 to form the combustion gases 66.

The combustion gases 66 are routed through the HP turbine 28 where a portion of thermal and/or kinetic energy from the combustion gases 66 is extracted via sequential stages of HP turbine stator vanes 68 that are coupled to the outer casing 18 and HP turbine rotor blades 70 that are coupled to the HP shaft or spool 34, thus causing the HP shaft or spool 34 to rotate, thereby supporting operation of the HP compressor 24. The combustion gases 66 are then routed through the LP turbine 30 where a second portion of thermal and kinetic energy is extracted from the combustion gases 66 via sequential stages of LP turbine stator vanes 72 that are coupled to the outer casing 18 and LP turbine rotor blades 74 that are coupled to the LP shaft or spool 36, thus causing the LP shaft or spool 36 to rotate, thereby supporting operation of the LP compressor 22 and/or rotation of the fan 38.

The combustion gases 66 are subsequently routed through the jet exhaust nozzle section 32 of the core turbine engine 16 to provide propulsive thrust. Simultaneously, the pressure of the first portion 62 of air is substantially increased as the first portion 62 of air is routed through the bypass airflow passage 56 before it is exhausted from a fan nozzle exhaust section 76 of the turbofan 10, also providing propulsive thrust. The HP turbine 28, the LP turbine 30, and the jet exhaust nozzle section 32 at least partially define a hot gas path 78 for routing the combustion gases 66 through the core turbine engine 16.

Although the gas turbine engine of FIG. 1 is depicted in a turboshaft configuration, it will be appreciated that the teachings of the present disclosure can apply to other types of turbine engines, turbomachines more generally, and other shaft systems. For example, the turbine engine may be another suitable type of gas turbine engine, such as e.g., a turboprop, turbojet, turbofan, aeroderivatives, etc. The present disclosure may also apply to other types of turbo machinery, such as e.g., steam turbine engines. Further, the present disclosure may apply to other types of composite components, such as those used in applications other than turbomachinery.

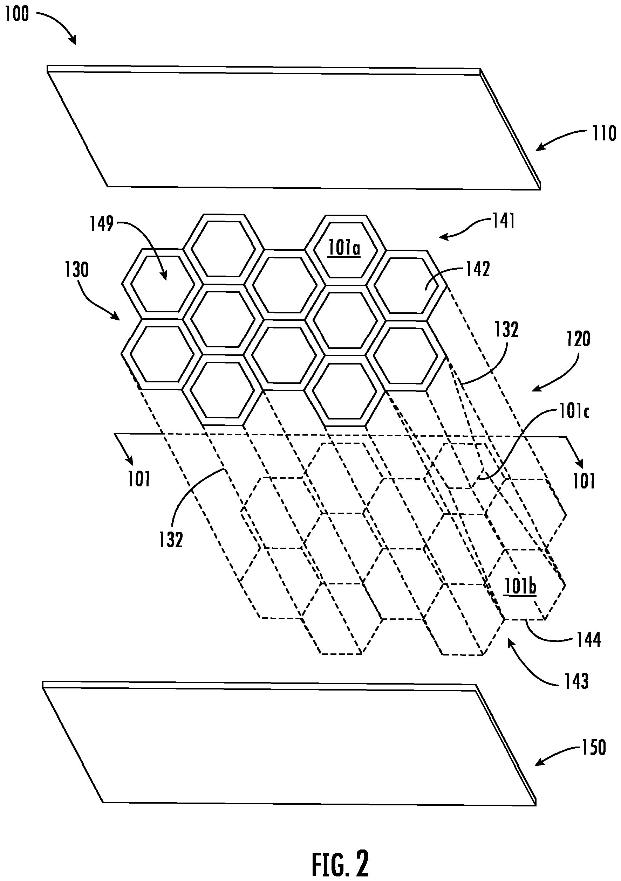

Referring now to FIG. 2, an exploded view of a composite panel 100 is illustrated according to one or more embodiments described herein. The composite panel 100 may form part of a turbomachine component, which may be implemented in the turbofan engine 10 discussed above with reference to FIG. 1. For example, the turbomachine component may be a compressor section component, a combustion section component, and/or a turbine section component.

The composite panel 100 generally includes a core structure 120 and a composite face sheet 110 bonded to a first side of the core structure 120. For illustrative purposes and ease of clarity, the first side is also referred to as the top side 141. In some embodiments, such as that illustrated in FIG. 2, the composite panel 100 may further comprise a composite back sheet 150 bonded to a second side of the core structure 120. Collectively, the composite face sheet 110 and the composite back sheet 150 are "composite sheets 110, 150." For illustrative purposes and ease of clarity, the second side is also referred to as the bottom side 143, which is opposite the top side 141. The core structure 120 may also include a cross-sectional geometry 101a, 101b, 101c that is nonuniform in a height direction between a top face 142 of top side 141 and a bottom face 144 of the bottom side 143. Such a configuration can provide the top face 142 of the core structure 120, the bottom side 143 of the core structure 120, or a combination thereof to produce greater bonding with the composite face sheet 110, the composite back sheet 150, or a combination thereof where present while also producing a lighter composite panel 100 compared to a completely solid composite material.

As illustrated in FIG. 2, the core structure 120 comprises a plurality of hollow cells 130 defined by a plurality of walls 132 extending from a top face 142 on the top side 141 to a bottom face 144 on the bottom side 143. Each of the plurality of hollow cells 130 that form the core structure 120 can extend in a parallel direction with one another. Moreover, each top face 142 for each of the plurality of hollow cells 130 may be planar with one another so that the top side 141 of the core structure 120 comprises a substantially flat plane comprising a plurality of top faces 142 from the plurality of hollow cells 130. Likewise, each bottom face 144 for each of the plurality of hollow cells 130 may be planar with one another so that the bottom side 143 of the core structure 120 comprises a substantially flat plane comprising a plurality of bottom faces 144 from the plurality of hollow cells 130. In such embodiments, the top faces 142 and the bottom faces 144 may be parallel with one another such that the composite face sheet 110 bonded to the top side 141 of the core structure 120 will be parallel with the composite back sheet 150 bonded to the bottom side 143 of the core structure 120.

While the core structure 120 in FIG. 2 is illustrated as having a plurality of hollow cells 130 that are parallel with one another, are the same length as one another, and comprise the top side 141 parallel with the bottom side 143, it should be appreciated that a variety of alternative or additional configurations may also be realized within the scope of this disclosure. For example, the plurality of hollow cells 130 may comprise different lengths, may comprise different orientations, may produce top sides 141 and bottom sides 143 that are not planar or not parallel with one another, or any combination thereof.

As illustrated in FIG. 2, the plurality of walls 132 of the plurality of hollow cells 130 define the shape, and more specifically, the cross-sectional geometry 101a, 101b, 101c, of each of the plurality of hollow cells 130. That is, the plurality of walls 132 create a partially closed structure (i.e., enclosed by the plurality of walls 132 on the side but potentially open on the ends at the top face 142 or the bottom face 144) to define a hollow interior 149 to form a cross-sectional geometry 101a, 101b, 101c for each of the plurality of cells. As used herein, the cross-sectional geometry 101a, 101b, 101c refers to the open, or closed, space between the plurality of walls 132 at any point along the length of any individual cell. For example, each cell 130 has a cross-sectional geometry 101a at its top face 142 at the top side 141 of the core structure 120, a cross-sectional geometry 101b at its bottom face 144 at the bottom side 143 of the core structure 120, and a cross-sectional geometry 101c between the top side 141 and the bottom side 143. The plurality of walls 132 may be brought together to form the plurality of hollows cells 130 using a variety of different techniques. For instance, as a non-limiting example, the plurality of walls 132 may be unitarily formed, monolithically formed, or unitarily and monolithically formed.

The cross-sectional geometry 101a, 101b, 101c can comprise a variety of different shapes within each of the plurality of hollow cells 130. For example, as shown in the embodiment of FIG. 2, the cross-sectional geometry 101a, 101b, 101c of each hollow cell 130 may be a hexagon. However, as will be described below, the plurality of hollow cells 130 may have cross-sectional geometries 101a, 101b, 101c that are different, e.g., where the cross-sectional geometry 101a, 101b, 101c is one of a hexagon, circle, square, or a triangle in non-limiting examples. However, the core structure does not need to include hollow cells. For example, in other embodiments, the core may be solid.

The composite face sheet 110, the composite back sheet 150, and the core structure 120 can comprise a combination of different materials to facilitate structural and mechanical requirements for the composite panel 100. The composite face sheet 110 and the composite back sheet 150 can comprise any composite material, such as a ceramic matrix composite (also referred to as "CMCs"). Composite materials generally comprise a fibrous reinforcement material embedded in matrix material. The reinforcement material serves as a load-bearing constituent of the composite material, while the matrix of a composite material serves to bind the fibers together and act as the medium by which an externally applied stress is transmitted and distributed to the fibers. Generally, CMCs are well suited for structural applications because of their toughness, thermal resistance, high-temperature strength, and chemical stability. Such composites may have high strength-to-weight ratio that renders them attractive in applications in which weight is a concern, such as in aeronautic applications. Further, their stability at high temperatures renders CMCs very suitable in applications in which components are in contact with a high-temperature gas, such as within a gas turbine engine.

Exemplary CMC materials may include silicon carbide (SiC), silicon, silica, carbon, or alumina matrix materials and combinations thereof. Ceramic fibers may be embedded within the matrix, such as oxidation stable reinforcing fibers including monofilaments like sapphire and silicon carbide (e.g., Textron's SCS-6), as well as rovings and yarn including silicon carbide (e.g., Nippon Carbon's NICALON^{®}, Ube Industries' TYRANNO^{®}, and COI Ceramic's SYLRAMIC^{®}), alumina silicates (e.g., 3M's Nextel 440 and 480), and chopped whiskers and fibers (e.g., 3M's Nextel 440 and SAFFIL^{®}), and optionally ceramic particles (e.g., oxides of Si, Al, Zr, Y, and combinations thereof) and inorganic fillers (e.g., pyrophyllite, wollastonite, mica, talc, kyanite, and montmorillonite). For example, in certain embodiments, bundles of the fibers, which may include a ceramic refractory material coating, are formed as a reinforced tape, such as a unidirectional reinforced tape. A plurality of the tapes may be laid up together (e.g., as plies) to form a preform component. The bundles of fibers may be impregnated with a slurry composition that contains ceramic particles prior to forming the preform (e.g., prepreg plies) or after formation of the preform. The preform may then undergo thermal processing, such as a cure or burn-out to yield a high char residue in the preform, and subsequent chemical processing, such as melt-infiltration with silicon, to arrive at a component formed of a CMC material having a desired chemical composition. In other embodiments, the CMC material may be formed as, e.g., a carbon fiber cloth rather than as a tape.

The core structure 120 may comprise a different material compared to the composite face sheet 110 or the composite back sheet 150. By way of non-limiting example, the core structure 120 may be a material that is less dense than the material of the composite face sheet 110 or the composite back sheet 150. However, even when the material of the core structure 120 is different, it is compatible with the composite face sheet 110 and the composite back sheet 150 to produce a sufficient bond between the components, including in extreme operating conditions such as high temperatures. In exemplary embodiments, the core structure 120 may include silicon, silicon carbide, alumina, carbon, or aluminosilicates, or combinations thereof.

Particularly, the core structure may be an additively manufactured core structure 120. The core structure 120 may be additively manufactured by building a plurality of successive layers of the core structure 120 through the selective solidification of ceramic feedstock, which may include silicon carbide, carbon materials, unreinforced ceramics, or combinations thereof.

Any suitable additive manufacturing process may be used. For instance, in some examples, the component may be additively manufactured using the composite granules via binder jet printing (BJP), powder bed fusion (PBF), direct metal laser melting (DMLM) technology, a selective laser melting (SLM) technology, a directed metal laser sintering (DMLS) technology, or a selective laser sintering (SLS) technology, fused deposition melting (FDM) technology, direct energy deposition (DED) technology, laser engineered net shaping (LENS) technology, laser net shape manufacturing (LNSM) technology, Digital Light Processing (DLP) technology.

After printing the core structure 120 using the ceramic feedstock, the component can undergo one or more additional processing steps, such as resin or pre-ceramic polymer impregnation and curing followed by burnout to remove any binder, and densification via infiltration of molten silicon. For instance, the component produced from BJP and DLP additive manufacturing may be a green body comprising binder. The green body may undergo a curing process followed by a burnout step of the binder material to provide what is considered a porous component. The porous component can comprise the silicon carbide, carbon (such as less than 5% carbon) and other constituents from the initial ceramic feedstock.

Subsequently, the porous component can then undergo densification to reduce its porosity. In some embodiments, the composite sheets 110, 150 may be applied to the core structure 120 prior to densification. Densification can occur through infiltration of the pores using a densifying material, such as silicon, silicon-containing reactants, a silicon alloy, or reactive vapor constituents of Si, such as SiO(g), SiH₄ and SiCl₄. In some examples, densification may comprise melt infiltration (MI), where the component is infiltrated with molten silicon, such that molten silicon is the densification fluid. In some examples, densification may comprise chemical vapor infiltration (CVI) whereby the component is infiltrated into a fibrous preform by the use of reactive gases at elevated temperature to form the fiber-reinforced composite, such that the reactive gases are the densification fluid. In some examples, densification may comprise polymer infiltration and pyrolysis (PIP), where the component is infiltrated with a preceramic polymer, such as polysilazane, and then heat treated to form a SiC matrix, such that the preceramic polymer is the densification fluid. In some examples, densification may comprise an oxide/oxide processes (e.g., for aluminum or alumino-silicate reinforcement material components). In some examples, densification may comprise a combination of these infiltration processes.

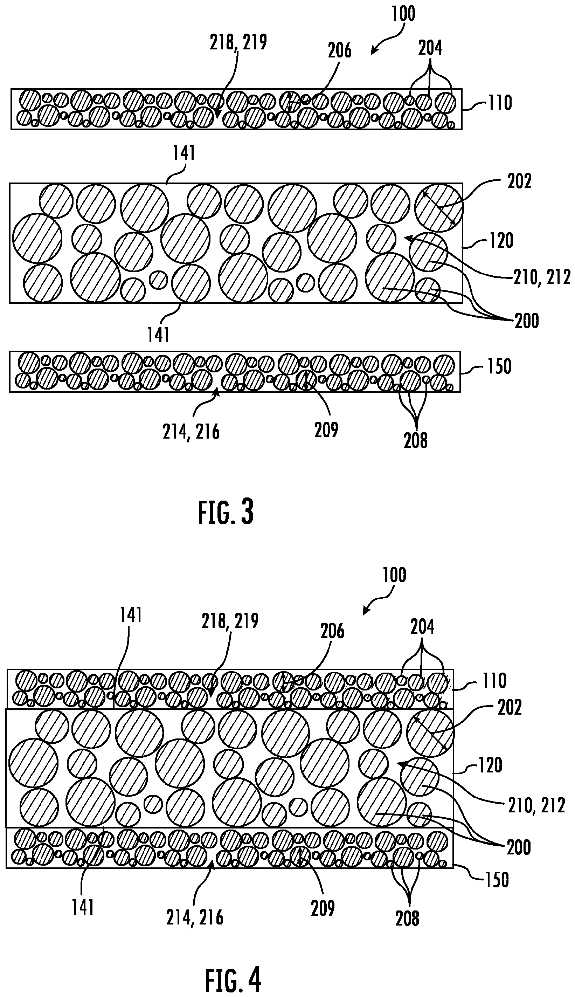

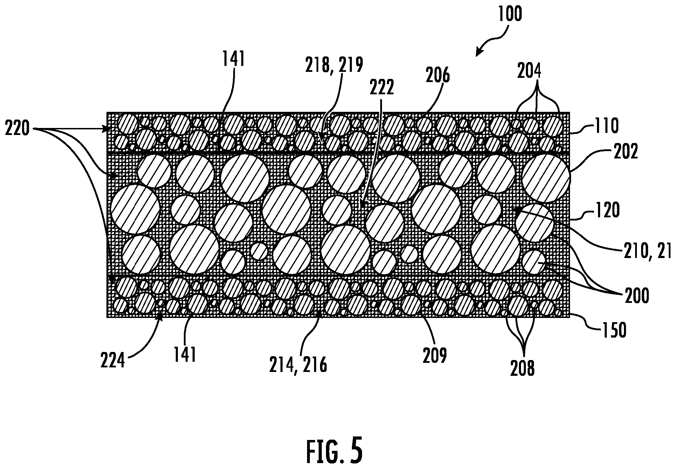

Referring now to FIGS. 3, 4, and 5, each of which illustrate a microscopic (e.g., enlarged view) of various stages of manufacturing a composite panel 100 in accordance with embodiments of the present disclosure. Particularly, FIG. 3 illustrates an enlarged (e.g., microscopic) and exploded view of the composite panel 100 having the core structure 120 and composite sheets 110, 150 prior to melt infiltration. FIG. 4 illustrates an enlarged (e.g., microscopic) view of the composite panel 100 having the core structure 120 and the composite sheets 110, 150 applied thereto (e.g., bonded to the core structure) prior to densification of the composite panel 100. FIG. 5 illustrates an enlarged (e.g., microscopic) view of the composite panel 100 after densification (e.g., melt infiltration). In FIGS. 3-5, the core structure 120 is shown as a cross-sectional portion of core structure 120, without the hollow cells 130, along the line 101 of FIG. 2.

As shown, the composite panel 100 may include the core structure 120 having the top side 141 and the bottom side 143. The composite face sheet 110 may be applied (e.g., laid up) to the top side 141 and bonded to the top side 141. Similarly, the composite back sheet 150 may be applied (e.g., laid up) to the bottom side 143 and bonded to the bottom side 143 (see FIGS 4 and 5).

As shown in FIGS. 3-5, the core structure 120 may include a plurality of first ceramic particles 200 each having a first particle size 202 that is within a first particle size range. The plurality of first ceramic particles 200 may be silicon carbide particles (i.e., silicon carbide particles, crystallites, or granules) in exemplary embodiments. The plurality of first ceramic particles 200 may also include small amounts of carbon (such as less than about 5%, with a remainder being silicon carbide). This is important because, during melt infiltration, the silicon may react with the carbon causing it to expand (up to two times its original size in some circumstances), which can close the pores and stop or slow infiltration, which is undesired. As such, low amounts (or no) carbon is advantageous for the core structure 120 and the plurality of first ceramic particles 200 when the core structure 120 is being used to transport molten silicon over long distances.

The particle size refers to the largest dimension across the particle. As shown, the size of each of the plurality of first ceramic particles 200 may vary slightly while still falling within the first particle size range. The plurality of first ceramic particles 200 may have a size, shape, and chemistry that may be suitable for additive manufacturing. The particles have been shown as circular for clarity reasons but it will be understood that this need not be the case.

The composite face sheet 110 may include a plurality of second ceramic particles 204 each having a second particle size 206 that is within a second particle size range. The plurality of second ceramic particles 204 may be silicon carbide particles in exemplary embodiments, which may be mixed with carbon. Unlike the core structure 120, the composite sheets 110, 150 may include larger amounts carbon within the second/third ceramic particle mixture, such as upwards of 5% carbon with a remainder being silicon carbide.

As shown, the size of each of the plurality of second ceramic particles 204 may vary while still falling within the second particle size range. Similarly, the composite back sheet 150 may include a plurality of third ceramic particles 208 each having a third particle size 209 that is within the second particle size range. That is, the plurality of third ceramic particles 208 may be generally the same size as the plurality of second ceramic particles 204. The plurality of third ceramic particles 208 may be silicon carbide particles in exemplary embodiments. As shown, the size of each plurality of third ceramic particles 208 may vary while still falling within the second particle size range.

In exemplary embodiments, the second particle size 206 may be, on average, smaller than the first particle size 202. That is, the second particle size range is smaller is smaller than the first particle size range. That is, the second particle size range may be smaller than the first particle size range. In this context, an "average" particle size may be any one or more of a mean (such as an arithmetic mean or a geometric mean), a median, or a mode of the particle sizes of the particles. For example, the second particle size 206 may be, on average, from 0.01% to 1% of the first particle size 202. Additionally, the second particle size range is smaller than the first particle size range (e.g., the mean, median, and/or mode of the second particle size range is less than the mean, median, and/or mode of the first particle size range). In some embodiments, the first particle size range and the second particle size range may not overlap. In other embodiments, the first particle size range and the second particle size range may partially overlap (e.g., the minimum value of the first particle size range is less than the maximum value of the second particle size range). For example, the first particle size range may include up to 30% overlap with the second particle size range, or such as 20% overlap, or such as 10% overlap, or such as 1% overlap.

In exemplary embodiments, the composite panel 100 may include a grain ratio between a first average (e.g., a mean, median, and/or mode) of the first particle size range (e.g., the range of sizes of the plurality of first ceramic particles 200) and a second average of the second particle size range (e.g., the range of sizes of the plurality of second ceramic particles 204. Specifically, the first average may be a first median of the first particle size range (e.g., the 50^{th} percentile of the size of the plurality of first ceramic particles 200). Similarly, the second average may be a second median of the second particle size range (e.g., the 50^{th} percentile of the size of the plurality of second ceramic particles 204).

In many embodiments, the grain ratio of a first average (e.g., the mean, median, and/or mode) of the first particle size range to an average of the second particle size range may be from about 10:1 to about 500:1. In other embodiments, the grain ratio between the first average of the first particle size range and the second average of the second particle size range may be from about 10:1 to about 250:1, or such as from about 10:1 to about 100: 1, or such as from about 10:1 to about 50:1.

Specifically, the first particle size range (e.g., within which each of the first particle sizes 202 fall) is from about 10 micrometers (µm) to about 500 µm. In other embodiments, the first particle size range may be from about 10 µm to about 400 µm, or such as from about 10 µm to about 300 µm, or such as from about 10 µm to about 150 µm, or such as from about 10 µm to about 100 µm, or such as from about 10 µm to about 50 µm.

In exemplary embodiments, the second particle size range (e.g., within which each of the second particle sizes 206 fall) may be from about 0.1 micrometer (µm) to about 10 µm. In other embodiments, the second particle size range may be from about 0.25 µm to about 10 µm, or such as from about 0.5 µm to about 10 µm, or such as from about 1 µm to about 10 µm, or such as from about 5 µm to about 10 µm.

In many embodiments, as shown in FIGS. 3-5, the core structure 120 may include a plurality of first pores 210 each having a first pore size 212 that is within a first pore size range. The plurality of first pores 210 may be defined between the plurality of first ceramic particles 200. The first pore size 212 may be the largest dimension across each of the first pores 210. Similarly, the composite face sheet 110 includes a plurality of second pores 214 each having a second pore size 216 that is within a second pore size range. The plurality of second pores 214 may be defined between the plurality of second ceramic particles 204. The second pore size 216 may be the largest dimension across each of the second pores 214. Additionally, the composite back sheet 150 includes a plurality of third pores 218 each having a third pore size 219 that is within the second pore size range. The plurality of third pores 218 may be defined between the plurality of third ceramic particles 208. The third pore size 219 may be the largest dimension across each of the plurality of third pores 218. The first pore size 212 may be larger than the second pore size 216 (and larger than the third pore size 219), e.g., between about 10 times larger and about 1000 times larger.

For example, in many embodiments, a pore ratio of a first average (e.g., the mean, median, or mode) of the first pore size range to a second average of the second pore size range may be from about 10:1 to about 1000:1. In some embodiments, the pore ratio of the first average of the first pore size range to the second average of the second pore size range may be from about 10:1 to about 500:1. In other embodiments, the pore ratio of the first average of the first pore size range to the second average of the second pore size range may be from about 10:1 to about 250:1. In certain embodiments, the pore ratio of the first average of the first pore size range to the second average of the second pore size range may be from about 10:1 to about 100:1. The third pore size 219 may be the same as the second pore size 216.

Specifically, the first pore size range (e.g., within which each first pore size 212 falls) may be from about 10 µm to about 1000 µm, or such as from about 10 µm to about 800 µm, or such as from about 10 µm to about 500 µm, or such as from about 10 µm to about 250 µm, or such as from about 10 µm to about 100 µm, or such as from about 10 µm to about 50 µm. Additionally, the second pore size range (e.g., within which each second pore size 216 falls) may be from about 0.01 micrometer (µm) to about 10 µm, or such as from about 0.025 µm to about 10 µm, or such as from about 0.05 µm to about 10 µm, or such as from about 0.1 µm to about 10 µm, or such as from about 0.5 µm to about 10 µm.

FIG. 5 illustrates a composite panel 100 after undergoing densification (e.g., melt infiltration, chemical vapor infiltration, or the like) through infiltration with silicon 220. The silicon 220 may be shown as a pattern in FIG. 5, and the silicon 220 may fill the pores 210, 214, 218 of the composite panel 100. The core structure 120 having a plurality of first ceramic particles 200 that are larger than the second and third ceramic particles 204, 208 of the composite sheets 110, 150 advantageously facilitates faster (and more efficient) melt infiltration of the silicon 220 because the silicon 220 can permeate through the first pores 210 more quickly.

The length of the composite sheets 110, 150 is significantly greater than the thickness thereof, and while it would take a relatively long time to transport the silicon 220 the entire length of the composite sheets 110, 150 through the fine pore structure of the composite sheets 110, 150, it takes a much shorter time to transport the silicon 220 through the thickness of the composite sheets 110, 150 as the distance the silicon 220 needs to travel is much shorter. Silicon 220 travels quickly through the core structure 120 due to the larger size of the plurality of first ceramic particles 200 of the core structure 120, and the silicon 220 may then flow from the core structure 120 into the composite sheets 110, 150 and infiltrate the composite sheets 110, 150 in a thickness direction of the composite sheets 110, 150 (i.e., from where each of the composite sheets 110, 150 contacts the core structure 120 to the free surface of each of the composite sheets 110, 150). This rapid infiltration of the composite sheets 110, 150 would not otherwise occur if the melt infiltration was performed solely down the length of the composite sheets 110, 150 because the silicon 220 would be traveling at a much slower rate through the fine pore structure and much greater time would be required for complete infiltration.

The composite panel 100 may be a large component, such that the composite panel 100 occupies a total volume of from about 0.5 m³ to about 2 m³. Of which, the core structure 120 may be from about 50% to about 80% of the total volume of the composite panel 100, and the composite sheets 110, 150 may be from about 20% to about 50% of the total volume of the composite panel 100.

Once the densification is completed, as shown in FIG. 5, the densified silicon may form a first network of infiltrant 222 that fills the pores in the core structure 120 and a second network of infiltrant 224 that fills the pores in the composite sheets 110, 150. The first network of infiltrant 222 may fill (or occupy the space) of the first pores 210. The first network of infiltrant 222 having a size scale similar (e.g., equal to or within a 1%-10% margin) to that of the first pore size 212. Similarly, the composite sheets 110, 150 may each include the second network of infiltrant 224 that fills (e.g., occupies the space) the plurality of second pores 214. the second network of infiltrant 224 may include a size scale that is similar (e.g., equal to or within a 1%-10% margin) to that of the second pore size 216.

In the case of reactive melt infiltration, the size scale of the resulting infiltrant network may be different than that of the pore size. For example, in the case where the Silicon infiltrant reacts with Carbon in the preform to form Silicon Carbide, the volume change due to that reaction will fill some of the pore space with Silicon Carbide and the resulting network of silicon infiltrant will have a smaller size scale than the starting pore structure. It will be appreciated that melt infiltration is one example of a densification process, and other densification processes (such as chemical vapor infiltration) may be used.

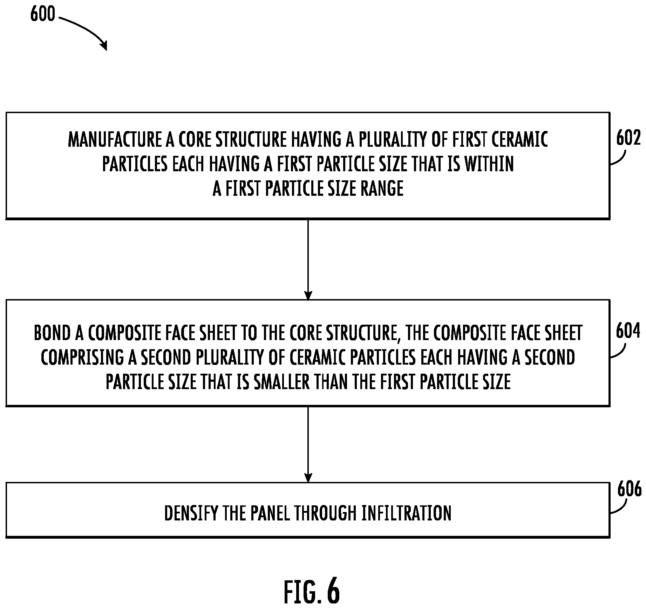

Referring now to FIG. 6, a flow diagram of one embodiment of a method 600 of manufacturing a composite panel is illustrated in accordance with embodiments of the present subject matter. In general, the method 600 will be described herein with reference to the composite panel 100 and the core structure 120 described above with reference to FIGS. 2 through 5. However, it will be appreciated by those of ordinary skill in the art that the disclosed method 600 may generally be utilized with any suitable composite panel. In addition, although FIG. 6 depicts steps performed in a particular order for purposes of illustration and discussion, the methods discussed herein are not limited to any particular order or arrangement unless otherwise specified in the claims. One skilled in the art, using the disclosures provided herein, will appreciate that various steps of the methods disclosed herein can be omitted, rearranged, combined, and/or adapted in various ways without deviating from the scope of the present disclosure.

As shown in FIG. 6, the method 600 may include at (602) manufacturing a core structure having a plurality of first ceramic particles each having a first particle size that is within a first particle size range. In exemplary embodiments, manufacturing at (602) may include additively manufacturing the core structure. That is, the core structure may be additively manufactured using the first ceramic particles (and/or a binder) via binder jet printing (BJP), powder bed fusion (PBF), direct metal laser melting (DMLM) technology, a selective laser melting (SLM) technology, a directed metal laser sintering (DMLS) technology, or a selective laser sintering (SLS) technology, fused deposition melting (FDM) technology, direct energy deposition (DED) technology, laser engineered net shaping (LENS) technology, laser net shape manufacturing (LNSM) technology, Digital Light Processing (DLP) technology.

While additive manufacturing is disclosed as an exemplary method for manufacturing the core structure, it should be appreciated that other ceramic processing techniques may also be utilized within the scope of this disclosure such as, for example, extrusion processing. Depending on the materials used, the manufacturing process, or other manufacturing variables, the core structure may be ready for use in the composite panel, or may require one or more further intermediate processing steps. For example, in some embodiments, the core structure may be in a green state after additive manufacturing. Thus, in such embodiments, the method may further comprise curing the core structure to remove moisture or sintering the core structure. It will be appreciated that step (602) may be optional, and the method 600 may begin with a premanufactured core structure.

In many implementations, the method 600 may include at (604) bonding a composite face sheet to the core structure (e.g., at the first side of the core structure). Additionally, at (604), the composite face sheet may include a plurality of second ceramic particles each having a second particle size that is within a second particle size range. Further, at (604), the second particle size may be smaller than the first particle size. That is, the ceramic particles that partially form the core structure may be larger than the ceramic particles that partially form the composite face sheet.

Additionally, the second particle size range may be smaller than the first particle size range (e.g., the mean, median and/or mode of the second particle size range is less than the mean, median, and/or mode of the first particle size range). In some embodiments, the first particle size range and the second particle size range may not overlap. In other embodiments, the first particle size range and the second particle size range may partially overlap (e.g., the minimum value of the first particle size range is less than the maximum value of the second particle size range). For example, the first particle size range may include up to 30% overlap with the second particle size range, or such as 20% overlap, or such as 10% overlap, or such as 1% overlap.

Bonding may include any suitable process to mechanically integrate the composite sheet with the core structure. For example, bonding at (604) may include adhesive bonding. In some embodiments, bonding at (604) may include one or more manufacturing steps utilized in manufacturing ceramic matrix composites, such as infiltration of the ceramic material or curing. In many embodiments, the core structure further includes a second side opposite the first side, and the method may further include bonding a composite back sheet to the core structure at the second side.

In exemplary implementations, the method 600 may include at (606) densifying the composite panel through infiltration. Densification can occur through infiltration of the pores using a densifying material, such as silicon, silicon-containing reactants, a silicon alloy, or reactive vapor constituents of Si, such as SiO(g), SiH₄ and SiCl₄. In some examples, densification may comprise melt infiltration (MI), where the component is infiltrated with molten silicon, such that molten silicon is the densification fluid. In some examples, densification may comprise chemical vapor infiltration (CVI) whereby the component is infiltrated into a fibrous preform by the use of reactive gases at elevated temperature to form the fiber-reinforced composite, such that the reactive gases are the densification fluid. The reactive gases may include any suitable and conventional gaseous carbon or silicon source, such as hydrocarbons, silicon, silicon-containing reactants, a silicon alloy, or reactive vapor constituents of Si, such as SiO(g), SiH₄ and SiCl₄, or mixtures thereof. In some examples, densification may comprise polymer infiltration and pyrolysis (PIP), where the component is infiltrated with a preceramic polymer, such as polysilazane, and then heat treated to form a SiC matrix, such that the preceramic polymer is the densification fluid. In some examples, densification may comprise an oxide/oxide processes (e.g., for aluminum or alumino-silicate reinforcement material components). In some example, densification may comprise a combination of these processes.

In exemplary embodiments, densifying at (606) may include densification through melt infiltration of silicon. As a result, the silicon may infiltrate faster through the plurality of first ceramic particles of the core structure than the plurality of second ceramic particles of the composite face sheet (i.e., silicon infiltrates faster through the core structure than the composite face sheet). This difference is because the pores defined between the first ceramic particles are larger than the pores defined between the second/third ceramic particles. Additionally, densifying at (606) may increase the bond strength (and/or further bond) the face sheet(s) to the core structure.

The core structure of the composite panel having a plurality of first ceramic particles that are larger than the ceramic particles of the composite sheets advantageously facilitates for faster (and more efficient) melt infiltration of silicon through the entire composite panel. For example, the silicon may travel through the core structure at a first rate that is faster than the silicon would travel through the composite face sheet in isolation. Further, when melt infiltration is performed on the entire composite panel, the silicon traveling through the core structure at the first rate may impact and permeate through the adjacent composite face sheet at a faster rate (e.g., faster than the silicon would travel through the composite face sheet if melt infiltration was performed on the composite face sheet in isolation).

Further aspects are provided by the subject matter of the following clauses:
A method of manufacturing a composite panel includes applying a composite face sheet to a first side of a core structure, the core structure including a plurality of first ceramic particles each having a first particle size that is within a first particle size range and the composite face sheet including a plurality of second ceramic particles each having a second particle size that is within a second particle size range, wherein the second particle size range is smaller than the first particle size range and densifying the composite panel through infiltration, wherein the infiltration includes transport of an infiltrant through the core structure and into the composite face sheet.

The method as in any of the preceding clauses, wherein the method further includes applying a composite back sheet to the core structure at a second side, the composite back sheet having a plurality of third ceramic particles each having a third particle size that is within the second particle size range.

The method as in any of the preceding clauses, further including additively manufacturing the core structure.

The method as in any of the preceding clauses, wherein densifying the composite panel includes melt infiltration with molten silicon as the infiltrant.

The method as in any of the preceding clauses, wherein densifying the composite panel includes chemical vapor infiltration with a gaseous carbon or silicon source or mixture thereof as the infiltrant.

The method as in any of the preceding clauses, wherein a grain ratio of a first average of the first particle size range to a second average of the second particle size range is from 10:1 to 500:1.

The method as in any of the preceding clauses, wherein the first particle size range is from 10 µm to 500 µm.

The method as in any of the preceding clauses, wherein the second particle size range is from 0.1 µm to 10 µm.

The method as in any of the preceding clauses, wherein the core structure further includes a plurality of first pores each having a first pore size that is within a first pore size range, wherein the composite face sheet includes a plurality of second pores each having a second pore size that is within a second pore size range, and wherein the first pore size range is larger than the second pore size range.

The method as in any of the preceding clauses, wherein a pore ratio of a first average of the first pore size range to a second average of the second pore size range is from 10:1 to 1000:1.

The method as in any of the preceding clauses, wherein the first pore size range is from 10 µm to 1000 µm.

The method as in any of the preceding clauses, wherein the second pore size range is from 0.01 µm to 10 µm.

The method as in any of the preceding clauses, wherein the composite panel forms part of a turbomachine component.

The method as in any of the preceding clauses, wherein the core structure comprises a plurality of hollow cells, the plurality of hollow cells defined by a plurality of walls extending from the first side to a second side.

A composite panel includes a core structure having a first side, the core structure including a plurality of first ceramic particles each having a first particle size that is within a first particle size range and a composite face sheet bonded to the core structure at the first side, the composite face sheet including a plurality of second ceramic particles each having a second particle size that is within a second particle size range, wherein the second particle size range is smaller than the first particle size range.

The composite panel as in any of the preceding clauses, wherein the core structure further includes a second side opposite the first side, and wherein the composite panel further includes a composite back sheet bonded to the core structure at the second side, the composite back sheet having a plurality of third ceramic particles each having a third particle size that is within the second particle size range.

The composite panel as in any of the preceding clauses, wherein a grain ratio of a first average of the first particle size range to a second average of the second particle size range is from 10:1 to 500:1.

The composite panel as in any of the preceding clauses, wherein the first particle size range is from 10 µm to 500 µm.

The composite panel as in any of the preceding clauses, wherein the second particle size range is from 0.1 µm to 10 µm.

The composite panel as in any of the preceding clauses, wherein the core structure further includes a plurality of first pores each having a first pore size that is within a first pore size range, wherein the composite face sheet includes a plurality of second pores each having a second pore size that is within a second pore size range, and wherein the first pore size is larger than the second pore size.

The composite panel as in any of the preceding clauses, wherein the core structure further comprises a first network of infiltrant that fills the plurality of first pores, the first network of infiltrant having a size scale similar to that of the first pore size, wherein the composite face sheet comprises a second network of infiltrant that fills the plurality of second pores, the second network of infiltrant having a size scale similar to that of the second pore size.

A method of manufacturing a composite panel comprising: applying a composite face sheet to a first side of a core structure, the core structure comprising a plurality of first ceramic particles each having a first particle size that is within a first particle size range and the composite face sheet comprising a plurality of second ceramic particles each having a second particle size that is within a second particle size range, wherein the second particle size range is smaller than the first particle size range; and densifying the composite panel through infiltration, wherein the infiltration comprises transport of an infiltrant through the core structure and into the composite face sheet.

The method as in any preceding clause, wherein the method further comprises applying a composite back sheet to the core structure at a second side, the composite back sheet having a plurality of third ceramic particles each having a third particle size that is within the second particle size range.

The method as in any preceding clause, further comprising additively manufacturing the core structure.

The method as in any preceding clause, wherein densifying the composite panel comprises melt infiltration with molten silicon as the infiltrant.

The method as in any preceding clause, wherein densifying the composite panel comprises chemical vapor infiltration with a gaseous carbon or silicon source or mixture thereof as the infiltrant.

The method as in any preceding clause, wherein a grain ratio of a first average of the first particle size range to a second average of the second particle size range is from 10:1 to 500:1.

The method as in any preceding clause, wherein the first particle size range is from 10 µm to 500 µm.

The method as in any preceding clause, wherein the second particle size range is from 0.1 µm to 10 µm.

The method as in any preceding clause, wherein the core structure further comprises a plurality of first pores each having a first pore size that is within a first pore size range, wherein the composite face sheet comprises a plurality of second pores each having a second pore size that is within a second pore size range, and wherein the first pore size range is larger than the second pore size range.

The method as in any preceding clause, wherein a pore ratio of a first average of the first pore size range to a second average of the second pore size range is from 10:1 to 1000:1.

The method as in any preceding clause, wherein the first pore size range is from 10 µm to 1000 µm.

The method as in any preceding clause, wherein the second pore size range is from 0.01 µm to 10 µm.

The method as in any preceding clause, wherein the composite panel forms part of a turbomachine component.

A composite panel comprising: a core structure having a first side, the core structure comprising a plurality of first ceramic particles each having a first particle size that is within a first particle size range; and a composite face sheet bonded to the core structure at the first side, the composite face sheet comprising a plurality of second ceramic particles each having a second particle size that is within a second particle size range, wherein the second particle size range is smaller than the first particle size range.

The composite panel as in any preceding clause, wherein the core structure further comprises a second side opposite the first side, and wherein the composite panel further comprises a composite back sheet bonded to the core structure at the second side, the composite back sheet having a plurality of third ceramic particles each having a third particle size that is within the second particle size range.

The composite panel as in any preceding clause, wherein a grain ratio of a first average of the first particle size range to a second average of the second particle size range is from 10:1 to 500:1.

The composite panel as in any preceding clause, wherein the first particle size range is from 10 µm to 500 µm.

The composite panel as in any preceding clause, wherein the second particle size range is from 0.1 µm to 10 µm.

The composite panel as in any preceding clause, wherein the core structure further comprises a plurality of first pores each having a first pore size that is within a first pore size range, wherein the composite face sheet comprises a plurality of second pores each having a second pore size that is within a second pore size range, and wherein the first pore size is larger than the second pore size.

The composite panel as in any preceding clause, wherein the core structure further comprises a first network of infiltrant that fills the plurality of first pores, the first network of infiltrant having a size scale similar to that of the first pore size, wherein the composite face sheet comprises a second network of infiltrant that fills the plurality of second pores, the second network of infiltrant having a size scale similar to that of the second pore size.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A method of manufacturing a composite panel comprising:
applying a composite face sheet to a first side of a core structure, the core structure comprising a plurality of first ceramic particles each having a first particle size that is within a first particle size range and the composite face sheet comprising a plurality of second ceramic particles each having a second particle size that is within a second particle size range, wherein the second particle size range is smaller than the first particle size range; and
densifying the composite panel through infiltration, wherein the infiltration comprises transport of an infiltrant through the core structure and into the composite face sheet.

2. The method as in claim 1, wherein the method further comprises applying a composite back sheet to the core structure at a second side, the composite back sheet having a plurality of third ceramic particles each having a third particle size that is within the second particle size range.

3. The method as in any preceding claim, further comprising additively manufacturing the core structure.

4. The method as in any preceding claim, wherein densifying the composite panel comprises melt infiltration with molten silicon as the infiltrant.

5. The method as in any preceding claim, wherein densifying the composite panel comprises chemical vapor infiltration with a gaseous carbon or silicon source or mixture thereof as the infiltrant.

6. The method as in any preceding claim, wherein a grain ratio of a first average of the first particle size range to a second average of the second particle size range is from 10:1 to 500:1.

7. The method as in any preceding claim, wherein the first particle size range is from 10 µm to 500 µm.

8. The method as in any preceding claim, wherein the second particle size range is from 0.1 µm to 10 µm.

9. The method as in any preceding claim, wherein the core structure further comprises a plurality of first pores each having a first pore size that is within a first pore size range, wherein the composite face sheet comprises a plurality of second pores each having a second pore size that is within a second pore size range, and wherein the first pore size range is larger than the second pore size range.

10. The method as in claim 9, wherein
a pore ratio of a first average of the first pore size range to a second average of the second pore size range is from 10:1 to 1000:1; and/or
the first pore size range is from 10 µm to 1000 µm; and/or
the second pore size range is from 0.01 µm to 10 µm.

11. The method as in any preceding claim, wherein the composite panel forms part of a turbomachine component.

12. A composite panel comprising:
a core structure having a first side, the core structure comprising a plurality of first ceramic particles each having a first particle size that is within a first particle size range; and
a composite face sheet bonded to the core structure at the first side, the composite face sheet comprising a plurality of second ceramic particles each having a second particle size that is within a second particle size range, wherein the second particle size range is smaller than the first particle size range.

13. The composite panel as in claim 12, wherein the core structure further comprises a second side opposite the first side, and wherein the composite panel further comprises a composite back sheet bonded to the core structure at the second side, the composite back sheet having a plurality of third ceramic particles each having a third particle size that is within the second particle size range.

14. The composite panel as in claim 12 or 13, wherein
a grain ratio of a first average of the first particle size range to a second average of the second particle size range is from 10:1 to 500: 1; and/or
the first particle size range is from 10 µm to 500 µm; and/or
the second particle size range is from 0.1 µm to 10 µm.

15. The composite panel as in any of claims 12 to 14, wherein
the core structure further comprises a plurality of first pores each having a first pore size that is within a first pore size range, wherein the composite face sheet comprises a plurality of second pores each having a second pore size that is within a second pore size range, and wherein the first pore size is larger than the second pore size; and optionally
the core structure further comprises a first network of infiltrant that fills the plurality of first pores, the first network of infiltrant having a size scale similar to that of the first pore size, wherein the composite face sheet comprises a second network of infiltrant that fills the plurality of second pores, the second network of infiltrant having a size scale similar to that of the second pore size.
